# EUROPÄISCHE PATENTSCHRIFT

(11) **EP 4 417 884 B1**
(45) Veröffentlichungstag und Bekanntmachung des Hinweises auf die Patenterteilung: **08.10.2025**
(21) Anmeldenummer: 24158741.9
(22) Anmeldetag: 20.02.2024
(51) Int. Cl.: F24F 1/32, F16L 5/14, H02G 3/22

(54) **ANSCHLUSSMODUL ZUM FLUIDLEITENDEN VERBINDEN EINES AUSSENGERÄTS MIT EINEM INNENGERÄT EINES WÄRMEÜBERTRAGER-SYSTEMS**
CONNECTION MODULE FOR CONNECTING AN EXTERNAL DEVICE WITH AN INTERNAL DEVICE OF A HEAT EXCHANGER SYSTEM IN A FLUID-CONDUCTING MANNER
MODULE DE RACCORDEMENT DESTINÉ AU RACCORDEMENT FLUIDIQUE D'UN APPAREIL EXTÉRIEUR À UN APPAREIL INTERNE D'UN SYSTÈME ÉCHANGEUR DE CHALEUR

(30) Priorität: 20.02.2023 EP 23157597
(43) Veröffentlichungstag der Anmeldung: 21.08.2024
(73) Patentinhaber: DOYMA GmbH & Co, 28876 Oyten (DE)
(72) Erfinder: Wagner, Thomas, 27777 Ganderkesee (DE)
(74) Vertreter: Eisenführ Speiser

(56) Entgegenhaltungen:
- US-A- 4 607 469
- US-A1- 2005 109 523
- US-A1- 2005 109 885

## Beschreibung

Die Erfindung betrifft ein Anschlussmodul zum fluidleitenden Verbinden eines Außengeräts mit einem Innengerät eines Wärmeübertrager-Systems durch eine Öffnung in einem Gebäude-Außenwandabschnitt hindurch. Des Weiteren betrifft die Erfindung auch eine Verbindungs-Anordnung eines Wärmeübertrager-Systems sowie ein Verfahren zum Installieren einer Verbindungs-Anordnung, wobei die Verbindungs-Anordnung einen Gebäude-Außenwandabschnitt, durch den eine Öffnung hindurch ausgebildet ist, ein auf der Außenseite des Außenwandabschnitts angeordnetes Außengerät, ein auf der Innenseite des Außenwandabschnitts angeordnetes Innengerät, und ein in der Öffnung angeordnetes Anschlussmodul aufweist.

Unter dem Begriff des Wärmeübertrager-Systems sind erfindungsgemäß Klimaanlagen, die im Inneren des Gebäudes eine Kühlwirkung erzeugen, und Heizanlagen, insbesondere Wärmepumpenanlagen, die im Inneren des Gebäudes eine Heizwirkung erzeugen, zu verstehen. Der Begriff Wärmeübertrager-System umfasst aber auch Nahwärme-, Fernwärme-, Erdwärme- und Solarthermie-Systeme.

Die erfindungsgemäße Wärmeübertrager-Wanddurchführung eignet sich für eine Wanddurchführung zur oberirdischen Installation eines Wärmeübertrager-Systems mit mehreren Leitungen. Die Wärmeübertrager-Wanddurchführung kann aber auch grundsätzlich für abweichende Einsatzzwecke zur Durchführung von Leitungen verwendet werden, wie beispielsweise für eine Wallbox für Elektro-Pkw, Wasserleitungen und Stromleitungen oder als Hausausführung für die Versorgung weiterer Bauten wie Swimmingpool, Gartenhäuschen, Poolbar oder Werkzeug- sowie Geräteschuppen oder dergleichen.

Im Stand der Technik ist das Verlegen von Fluidleitungen zwischen Innengerät und Außengerät durch das Erdreich bekannt. Daneben ist aber, gerade beim Nachrüsten solcher Wärmeübertrager-Systeme an Bestandsbauten, auch das nicht bodenberührte, überirdische Verbinden des Außengeräts mit dem Innengerät bekannt, bei dem die Fluidleitungen durch eine Außenwand eines Gebäudes verlegt werden.

Es hat sich herausgestellt, dass in vielen Baustellensituationen die Leitungen durch die Gebäude-Außenwand hindurchgeführt werden, und der verbleibende Spaltraum zwischen der Leitung und einer die Leitung umgebenden Wandfläche einfach mit geeignetem Bauschaum ausgefüllt wird. Diese Lösung hat den Nachteil einer völlig unzureichenden Abdichtung gegen Umgebungseinflüsse wie Feuchtigkeit, Kälte, Lärm, UV-Strahlung etc. Zudem wird als Nachteil gesehen, dass derartige Lösungen nicht vogelpicksicher sind.

Mit diesen im Stand der Technik üblichen Lösungen lässt sich ferner wegen der verschiedenen Wärmeausdehnungskoeffizienten von beispielsweise dem Außenwandabschnitt und den durch den Außenwandabschnitt geführten Leitungen häufig nur eine vergleichsweise geringe Dichtheit erzielen. Zudem kann es durch diese Art des Hindurchführens der Leitungen zu einer ungewollten Schallübertragung vom Wärmeübertrager-System auf die Wand des Gebäudes kommen.

Es sind auch Lösungen bekannt, die sogenannte Anschluss-Sets verwenden, bei denen teils isolierte Fluidleitungen in einem Futterrohr durch die Wand hindurchgeführt werden, wobei die Futterrohre gegenüber der Wand mit einfachen Dichtringen sporadisch abgedichtet werden. Selbst wenn die Dichtung zwischen Futterrohr und Wand ausreichend dicht sein sollte, was der Beobachtung nach tatsächlich regelmäßig nicht der Fall ist, verbleibt bei diesen Systemen ein Leerraum innerhalb des Futterrohrs, der gegen eine oder mehrere der obigen Umgebungseinflüsse nicht ausreichend abgedichtet ist.

Auch bei Verwendung der vorgenannten Anschluss-Sets kann es in Abhängigkeit von der Versiertheit eines mit der Installation solcher Systeme betrauten Installateurs dazu kommen, dass das System nicht luftdicht ist bzw. dauerhaft bleibt, und somit Kältebrücken zwischen der Außen- und der Innenseite des Gebäudes entstehen.

Aus US 2005/109523 A1 ist eine Durchführung für Leitungen oder Rohre eines Wärmeübertragers durch eine Wand eines Gebäudes bekannt. US 4,607,469 A1 betrifft eine Vorrichtung und ein Verfahren zum Abdichten gegenüber einer durch einen Wandabschnitt geführten Rohrleitung, in der ein oder mehrere durch die Rohrleitung hindurchgeführte Versorgungsleitungen angeordnet sind. US 2005/109885 A1 offenbart eine Montageplattenbaugruppe, welche zum geräuscharmen Hindurchführen einer Heizungsrohrbaugruppe durch ein Armaturenbrett eines Fahrzeugs vorgesehen ist.

Der Erfindung lag daher die Aufgabe zugrunde, ein Anschlussmodul zum fluidleitenden Verbinden eines Außengeräts mit einem Innengerät eines Wärmeübertrager-Systems, eine Verbindungs-Anordnung eines Wärmeübertrager-Systems sowie ein Verfahren zum Installieren einer Verbindungs-Anordnung aufzuzeigen, mittels denen die vorstehend beschriebenen Probleme möglichst weitgehend behoben werden, und sich insbesondere eine sichere Abdichtung gegenüber dem Gebäude-Außenwandabschnitt einfach und zuverlässig erreichen lässt, und sich unerwünschte Kältebrücken vermeiden lassen.

Gemäß einem ersten Aspekt löst die Erfindung die ihr zugrundeliegende Aufgabe bei einem Anschlussmodul zum fluidleitenden Verbinden eines außenseitig an einem Gebäude anordenbaren Außengeräts mit einem im Gebäude anordenbaren Innengerät eines Wärmeübertrager-Systems durch eine Öffnung in einem Gebäude-Außenwandabschnitt mit den Merkmalen nach Anspruch 1. Insbesondere ist an dem Anschlussmodul eine erste Anschlussschnittstelle für das Außengerät und eine zweite Anschlussschnittstelle für das Innengerät, wenigstens ein in die Öffnung im Gebäude-Außenwandabschnitt einsetzbarer, die erste und zweite Anschlussschnittstelle fluidleitend miteinander verbindender Leitungsabschnitt, eine erste, vorzugsweise dem außenwandseitigen Bereich der Öffnung zugeordnete, Verschlusseinheit und eine zweite, vorzugsweise dem innenwandseitigen Bereich der Öffnung zugeordnete, Verschlusseinheit, mit jeweils einem oder mehreren Durchgängen für den Leitungsabschnitt vorgesehen, wobei wenigstens eine der beiden Verschlusseinheiten, und vorzugsweise beide, zum abdichtenden Durchtritt des Leitungsabschnitts und zum abdichtenden Abschluss gegenüber der Öffnung im Gebäude-Außenwandabschnitt eingerichtet ist, und wobei die beiden Verschlusseinheiten entlang des Leitungsabschnitts zueinander beabstandet angeordnet sind und zwischen sich einen Aufnahmeraum definieren, der zur Aufnahme von Wärmedämmmaterial eingerichtet ist.

Die vorliegende Erfindung verfolgt hierbei den Ansatz, dass über wenigstens eine Verschlusseinheit des Anschlussmoduls eine abdichtende Funktion gegenüber der Außenseite des Leitungsabschnitts wie auch der den mindestens einen Leitungsabschnitt umgebenden und die Öffnung definierenden Wandfläche umgesetzt ist. An mindestens einer Stelle des erfindungsgemäßen Anschlussmoduls ist somit Fluiddichtheit nach DIN EN 60529 hergestellt, die den Durchtritt von Fluid, wie Wasser, behindert. Das erfindungsgemäßen Anschlussmodul weist vorzugsweise eine Schutzart von mindestens IP44 auf.

Unter einem Außen- und Innengerät wird vorliegend jedes beliebige Gerät eines Wärmeübertrager-Systems verstanden, wobei eines der beiden Geräte unabhängig von seiner jeweiligen Anordnung, also ob innen oder außen, auch als Komponente ohne einen eigenen Regelkreis des jeweils anderen Geräts, das auf dem entgegengesetzten wandseitigen Bereich angeordnet ist, ausgebildet sein kann.

Die beiden Verschlusseinheiten sind entlang des Leitungsabschnitts zueinander beabstandet angeordnet, wobei die beiden Verschlusseinheiten zwischen sich einen Aufnahmeraum zum Aufnehmen eines Wärmedämmmaterials definieren. Somit kann mit dem zwischen die Verschlusseinheiten einbringbaren Wärmedämmmaterial eine thermische Isolierwirkung, und ggf. zusätzliche Abdichtung gegen Fluiddurchtritt, umgesetzt werden. Neben einer wärmeisolierenden Wirkung kann das in den Aufnahmeraum zwischen die Verschlusseinheiten eingebrachte Wärmedämmmaterial schallisolierende Eigenschaften haben. Etwaige im Betrieb des Wärmeübertrager-Systems an dem Außen- und/oder Innengerät entstehende Schwingungen werden zumindest deutlich vermindert über den mindestens einen Leitungsabschnitt in den Gebäude-Außenwandabschnitt eingeleitet.

Eine bevorzugte Weiterbildung des Anschlussmoduls sieht vor, dass die erste und/oder die zweite Verschlusseinheit zum abdichtenden Durchtritt des Leitungsabschnitts und zum abdichtenden Abschluss gegenüber der Öffnung im Gebäude-Außenwandabschnitt einen den Leitungsabschnitt umgebenden Dichtkörper aufweist bzw. aufweisen. Mithilfe des Dichtkörpers, der vorzugsweise aus einem elastisch verformbaren Material besteht, ist die gewünschte Abdichtwirkung gegenüber der Außenseite des Leitungsabschnitts wie auch gegenüber der die Öffnung definierenden Wandfläche möglich. Der Dichtkörper weist vorzugsweise eine zylindrische Außenkontur auf und hat in Abhängigkeit von der Anzahl der Leitungsabschnitte eine korrespondierende Anzahl an Durchgängen. Der Dichtkörper ist in bevorzugten Ausführungsformen einteilig oder mehrteilig ausgebildet und weiter vorzugsweise teilweise oder vollständig aus Silikon, EPDM, Gummi, wie z. B. NBR, Zellkautschuk oder einem anderen geeigneten Elastomer-Dichtungsmaterial ausgebildet.

In einer bevorzugten Ausführungsform sind die Durchgänge als zylindrische Ausnehmungen bzw. Durchbrüche ausgebildet.

Vorzugsweise ist dem Dichtkörper mindestens eine Spanneinrichtung zum axialen Verspannen des Dichtkörpers zugeordnet. Es soll verstanden werden, dass das Verspannen in axialer Richtung auf die Mittenachse des Dichtkörpers bezogen ist. Mit Verspannen des Dichtkörpers in axialer Richtung weicht das zur Ausbildung des Dichtkörpers verwendete elastische Material quer zur Spannrichtung, und somit primär in radialer Richtung nach innen wie auch nach außen aus. Darüber ist das Abdichten gegenüber der die Öffnung definierenden Wandfläche und der Außenseite des Leitungsabschnitts bewirkt. Der Dichtkörper der Verschlusseinheit ist mit seinem außenseitigen Nennmaß wie auch hinsichtlich seiner die Leitungsabschnitte aufnehmenden Durchgänge entsprechend an die Abmessungen der Öffnung bzw. der durch diese hindurchzuführenden Leitungsabschnitte abgestimmt.

Gemäß einer bevorzugten Ausgestaltung des Anschlussmoduls weist die erste und/oder die zweite Verschlusseinheit zum Spannen des Dichtkörpers einer bzw. die ihm zugeordnete Spanneinrichtung auf. Der Dichtkörper ist im verspannten Zustand dazu eingerichtet, die Öffnung im Bereich der Außenseite des Außenwandabschnitts fluiddicht abzuschließen. Damit ist bereits dem Fluideintritt in die Öffnung des Gebäude-Außenwandabschnitts und einer daraus entstehenden Beeinträchtigung des Außenwandabschnitts von innen her entgegengewirkt.

Die erste und/oder zweite Verschlusseinheit steht in bevorzugten Ausführungsformen mit der die Öffnung definierenden Wandfläche, d. h. innen in der Bohrung bzw. dem Durchbruch, der zylindrisch oder auch unrund sein kann, durch die Wand, und/oder mit Bereichen der die Öffnung umgebenden Außenseite des Außenwandabschnitts abdichtend in Anlage stehen.

In einer bevorzugten Weiterbildung des Anschlussmoduls ist die Spanneinrichtung in einem in die Öffnung eingesetzten Zustand von der Außenseite und/oder der Innenseite des Außenwandabschnitts betätigbar, vorzugsweise von außerhalb der Öffnung. Damit ist ein einfaches und positionsgenaues Montieren der Verschlusseinheit im Bereich der Öffnung des Außenwandabschnitts möglich. In einer möglichen Ausführung wird die erste Verschlusseinheit etwa bündig mit der Außenseite des Gebäude-Außenwandabschnitts abschließend innerhalb der Öffnung montiert. Zudem erleichtert das bevorzugte Betätigen der Spanneinrichtung von außerhalb der Öffnung die Montage durch einen Installateur.

In einer bevorzugten Ausführung weist die Spanneinrichtung in axialer Richtung zwei zu beiden Seiten des Dichtkörpers angeordnete Spannkörper auf, wobei die Spannkörper mittels eines oder mehrerer Spannelemente miteinander verbunden sind. Die Spannelemente sind beispielsweise als Spannbolzen oder Spannschrauben ausgebildet. Der Abstand der Spannkörper zueinander ist mittels Betätigung des Spannelements veränderbar.

Eine Weiterbildung des Anschlussmoduls sieht vor, dass die Spanneinrichtung eine erste Spanneinrichtung ist, und das Anschlussmodul zusätzlich eine zweite Spanneinrichtung zum Verspannen der zweiten Verschlusseinheit aufweist. Durch die zweite Verschlusseinheit kann die Abdichtwirkung des Anschlussmoduls weiter erhöht werden.

Die erste und/oder zweite Spanneinheit ist je nach Ausgestaltung des Spannmoduls vorzugsweise dazu eingerichtet, außen- oder innenseitig gegen den Außenwandabschnitt verspannt zu werden. Mithilfe der zweiten Spanneinrichtung wird eine Spannkraft auf die zweite Verschlusseinheit aufgebracht, sodass diese im innenwandseitigen Bereich der Öffnung zumindest abdichtend in Anlage mit dem Außenwandabschnitt gelangt. Für einen abdichtenden Kontakt mit der Außenseite des Leitungsabschnitts können insbesondere an den Durchgängen der zweiten Verschlusseinheit radial nach innen vorstehende Abdichtelemente, etwa Lippen, Lamellen, Flachdichtungen oder Ringe, vorgesehen sein, die zumindest eine drucklose Abdichtfunktion umsetzen. Die Abdichtelemente ermöglichen insbesondere das Abdichten gegenüber der Außenseite des mindestens einen Leitungsabschnitts, dessen Durchmesser wegen der Flexibilität der Abdichtlamellen in einem vorgegebenen Bereich variieren kann.

Vorzugsweise weist die zweite Spanneinrichtung mindestens ein Spannmittel auf, das mit einem an der ersten Spanneinrichtung vorgesehenen, vorzugsweise axial in die Öffnung vorstehenden, Befestigungsabschnitt zusammenwirkt. Vorzugsweise wirken die erste Verschlusseinheit und die zweite Verschlusseinheit miteinander zusammen, was den Aufbau und die Handhabung des erfindungsgemäßen Anschlussmoduls durch einen Installateur innerhalb einer Öffnung weiter vereinfacht. Vorzugsweise erfolgt mittels der ersten Verschlusseinheit neben einem fluiddichten Abdichten gegenüber Öffnung und Leitungsabschnitt das Positionieren des Anschlussmoduls in axialer Richtung relativ zur Öffnung im Außenwandabschnitt. Die vorzugsweise in der Öffnung festgelegte erste oder zweite Verschlusseinheit fungiert als eine Art Anker bzw. Festlager in der Öffnung für das Verspannen der ersten oder zweiten Verschlusseinheit.

Vorzugsweise weist die zweite Spanneinrichtung ein sich zwischen der ersten Verschlusseinheit und der zweiten Verschlusseinheit erstreckendes Spannmittel, wie beispielsweise eine Spannschraube oder Gewindestange, auf. Vorzugsweise ist an der ersten Spanneinrichtung ein etwa axial abstehender Befestigungsabschnitt angeordnet, mit dem das Spannmittel der zweiten Spanneinrichtung zusammenwirkt. Der Befestigungsabschnitt kann beispielsweise ein, vorzugsweise mittig an der ersten Verschlusseinheit abstehender, Profilkörper, wie bspw. eine Langmutter, sein, der einen mit dem Spannmittel zusammenwirkenden Gewindeabschnitt aufweist.

Gemäß einer bevorzugten Weiterbildung erstreckt sich das mindestens eine Spannmittel durch die zweite Verschlusseinheit und ist von der Innenseite des Außenwandabschnitts betätigbar ausgebildet, vorzugsweise von außerhalb der Öffnung. Damit ist die Betätigung des erfindungsgemäßen Anschlussmoduls weiter vereinfacht. Zudem ist mit der zweiten Verschlusseinheit ein sauberer Abschluss auf der Innenseite des Außenwandabschnitts erzeugt. Mit dem sich durch die zweite Verschlusseinheit erstreckenden Spannmittel, das vorzugsweise einen mit der Verschlusseinheit in Kontakt bringbaren Schraubenkopf hat, kann die durch die zweite Spanneinrichtung erzeugte Spannkraft sicher auf die zweite Verschlusseinheit aufgebracht werden. In einer möglichen Ausführungsform weist die zweite Spanneinrichtung nur ein einziges Spannmittel auf, das durch eine im Mittenbereich der zweiten Verschlusseinheit ausgebildete Ausnehmung bzw. einen Durchbruch hindurchragt und mit dem ebenfalls etwa mittig an der ersten Verschlusseinheit axial abstehenden Befestigungsabschnitt korrespondiert.

Die erste und/oder zweite Spanneinrichtung, letztere im Fall der Verwendung mehrerer Spanneinrichtungen, ist vorzugsweise partiell oder vollständig aus einem elektrisch und/oder thermisch isolierendem Material, bevorzugt aus Kunststoff, gebildet. Damit kann die Entstehung von Kältebrücken oder eines Stromflusses entlang der Spanneinrichtungen bzw. durch die erste und/oder die zweite Spanneinrichtung, vermieden oder jedenfalls eingedämmt werden.

Vorzugsweise weist die erste und/oder zweite Verschlusseinheit eine sich außerhalb der Öffnung erstreckende Dichtscheibe mit einem Dichtelement auf, das dazu eingerichtet ist, sich gegen die Außenseite und/oder Innenseite des Außenwandabschnitts abdichtend anzulegen. Mit dem Vorsehen einer etwa kreisförmigen Dichtscheibe ist eine einfache Ausgestaltung der zweiten Verschlusseinheit bewirkt. Das Dichtelement ist vorzugsweise umlaufend entlang der Peripherie des Flächenbereichs der Dichtscheibe ausgebildet, der dem Außenwandabschnitt zugewandt ist, wodurch eine vollumfängliche Abdichtung der Verschlusseinheit gegen den Wandabschnitt erfolgt. In einer alternativen Ausführung ist das der zweiten Verschlusseinheit zugeordnete Dichtelement als ein sich über dessen gesamten Flächenbereich erstreckendes Dichtelement ausgebildet, das sowohl eine abdichtende Anlage mit der Innenseite des Außenwandabschnitts als auch mit dem mindestens einen Leitungsabschnitt umsetzt, der sich durch einen Durchgang an der zweiten Verschlusseinheit erstreckt.

Das Dichtelement erstreckt sich in bevorzugten Ausführungsformen auch teilweise in die Öffnung der Wand hinein und bewirkt damit eine Abdichtung gegen die Wandfläche der Öffnung.

Das Dichtelement ist vorzugsweise in einer Ausführung aus einem verformbaren Material, wie Gummi oder Kunststoff ausgebildet, welches als vorgefertigtes Formteil in einer Ausnehmung an der Innenseite der Dichtscheibe angeordnet ist. Das Dichtelement kann in einer Ausführung auch als Quellband sein. Das Quellband ist vorzugsweise als Polyurethan-Komprimierband, Polyethylen-Rundschnur, Polyurethan-Rundschnur oder Ethylen-Propylen-Dien-Kautschuk (EPDK)-Schaumstoffband ausgebildet. Gemäß einer alternativen Ausführungsform kann als Dichtelement auch Dickschichtkleber und/oder Schaumklebeband verwendet werden, welche vor dem Montieren der Verschlusseinheit auf dessen Innenseite aufgebracht werden.

Gemäß einer bevorzugten Ausgestaltung ist alternativ vorgesehen, dass die erste und zweite Verschlusseinheit eine einzige Spanneinrichtung aufweisen, welche zum Verspannen der ersten und zweiten Verschlusseinheit gegen den innen- und außenwandseitigen Bereich des Außenwandabschnitts vorgesehen ist. Die Spanneinrichtung weist vorzugsweise ein oder mehrere die Verschlusseinheiten miteinander koppelnden Spannmittel auf. Insbesondere in Verbindung mit der Ausgestaltung von erster und zweiter Verschlusseinheit als eine sich außerhalb der Öffnung erstreckende und mit einem Dichtelement ausgerüstete Dichtscheibe, spielt die Verwendung einer einzelnen Spanneinrichtung einen Montagevorteil aus, indem sie die Verschlusseinheiten von entgegengesetzten Seiten in Anlage mit den Wandbereichen des Außenwandabschnitts ziehen kann.

Grundsätzlich können somit drei Ausführungsformen für das Anschlussmodul unterschieden werden. Eine erste Ausführungsform umfasst zwei unterschiedlich ausgebildete Verschlusseinheiten, von denen eine erste Verschlusseinheit innerhalb der Öffnung im Gebäude-Außenwandabschnitt und die zweite Verschlusseinheit außerhalb der Öffnung und diese überdeckend angeordnet ist. Bei der zweiten und dritten Ausführungsform werden identisch ausgebildete Verschlusseinheiten verwendet. Bei der zweiten Ausführung sind jeweils beide Verschlusseinheiten innerhalb der Öffnung an gegenüberliegenden Enden der Öffnung angeordnet. In der dritten Ausführung sind beide Verschlusseinheiten jeweils außerhalb der Öffnung und diese überdeckend, an den Wandbereichen des Außenwandabschnitts anliegend angeordnet.

Gemäß einer bevorzugten Ausgestaltung des Anschlussmoduls sind zwei fluidleitende Leitungsabschnitte vorgesehen.

Mithilfe der zwei Fluidleitungen ist insbesondere eine Hin- und Rückleitung zwischen Innengerät und Außengerät, etwa für zu transportierendes Wärmeübertragermittel, ausgebildet. Vorzugsweise werden die beiden fluidleitenden Leitungsabschnitte des Anschlussmoduls, insbesondere auf halber Höhe in der Öffnung, horizontal und/oder vertikal beabstandet nebeneinander angeordnet. Jede der ersten und zweiten Verschlusseinheiten weist eine entsprechende Anzahl an Durchgängen für die durchzuführenden fluidleitenden Leitungsabschnitte auf.

Gemäß einer weiteren bevorzugten Ausführungsform weisen die Verschlusseinheiten zusätzlich zu dem einen oder den mehreren Durchgängen für fluidleitende Leitungsabschnitte einen oder mehrere Durchgänge für eine Strom- oder Signalleitung auf, wobei vorzugsweise die Durchgänge jeweils mittels eines Leerrohrs zur Aufnahme von Strom- oder Signalleitungen verbunden sind. Das Anschlussmodul ist dadurch auch zum elektrischen und/oder datenübertragenden Verbinden des Außengeräts mit dem Innengerät eingerichtet.

Damit erfolgt sowohl die Stromversorgung des Außengeräts als auch die Ansteuerung des Außengeräts vorzugsweise ausgehend vom Innengerät des Wärmeübertrager-Systems. Die von den Verschlusseinheiten aufgenommenen Leitungsabschnitte bilden eine gemeinsame erste, beispielsweise außenseitige Anschlussschnittstelle und eine gemeinsame zweite, innenseitige Anschlussschnittstelle aus. Ein als Strom- oder Signalleitung ausgebildeter Leitungsabschnitt kann beispielsweise als Anschlussschnittstelle einen Steckverbinder aufweisen, mit dem über einen korrespondierenden Steckverbinder eine strom- bzw. signalleitende Verbindung zu einem weiteren mit dem Außen- und/oder Innengerät gekoppelten Leitungsabschnitt hergestellt wird.

Vorzugsweise ist das bzw. sind die Leerrohre dazu eingerichtet, die innenliegenden Leitungen elektromagnetisch abzuschirmen. Damit kann eine elektromagnetische Störung bzw. Beeinflussung durch elektromagnetische Wechselwirkung zwischen den elektrischen Leitungen vermindert oder vermieden werden, insbesondere eine Störung der Signalleitung. Die Leerrohre vereinfachen zudem eine gewerkefachliche Trennung betreffend der Montage- und Installationsarbeiten: Der Fachhandwerker am Rohbau montiert bzw. setzt das Durchführungsmodul in die Öffnung des Gebäude-Außenwandabschnitts ein und dichtet es ab. Der Elektroinstallateur führt die elektrischen Leitungen durch das Durchführungsmodul und schließt das Außengerät elektrisch an, wohingegen der Heizungs- bzw. Wärmepumpeninstallateur die fluidleitenden Leitungsabschnitte zwischen dem Innen- und Außengerät und dem Anschlussmodul installiert und anschließt.

In bevorzugten Ausführungsformen weisen die Durchgangsöffnungen für die Strom- oder Signalleitungen bzw. die Leerrohre, vorzugsweise geschlossene, Kabeldurchführung auf, besonders bevorzugt mit einem der durchzuführenden elektrischen Leitung entsprechenden Durchmesser. Damit kann eine Dichtung des Durchgangs oder Leerrohrs gegen die darin durchgeführte elektrische Leitung erreicht werden. Als Kabeldurchführung werden vorzugsweise Kabelverschraubungen, Schrumpfschläuche oder wasserdichte Kabelsteckverbinder verwendet.

Gemäß einer Weiterbildung weist eine der beiden Verschlusseinheiten eine Einfüllöffnung für ein in den Aufnahmeraum einzubringendes Wärmedämmmaterial auf. Mit dem Vorsehen einer Einfüllöffnung an einer der Verschlusseinheiten ist das Einbringen von Wärmedämmmaterial in den Aufnahmeraum nach dem Montieren des Anschlussmoduls im Wandabschnitt auf vereinfachte Weise möglich. Vorzugsweise ist mit der Einfüllöffnung eine Einfüllhilfe fluidleitend verbunden, welche das Einbringen des Wärmedämmmaterials in den Aufnahmeraum zudem erleichtert. Über die Einfüllöffnung kann zum Beispiel ein Zwei-Komponenten-Schaum in den Aufnahmeraum eingegeben werden. Vorzugsweise weist das über die Einfüllöffnung der Verschlusseinheit eingebrachte Wärmedämmmaterial schallentkoppelnde und/oder schalldämpfende Eigenschaften und/oder schwingungsdämpfende Eigenschaften auf.

Die Einfüllöffnungen dienen vorzugsweise jeweils zugleich als Entlüftungsöffnungen. Wenn beispielsweise über die Seite der ersten Verschlusseinheit Wärmedämmmaterial in den Aufnahmeraum eingefüllt wird, kann Luft aus der Einfüllöffnung in der zweiten Verschlusseinheit entweichen.

Alternativ oder zusätzlich ist bzw. sind an einer oder beiden Verschlusseinheiten in einer bevorzugten Ausführungsform eine oder mehrere dedizierte Entlüftungsöffnungen vorgesehen.

Alternativ ist das Wärmedämmmaterial aus einem oder mehreren zum Einsetzen in den Aufnahmeraum eingerichteten Formteilen ausgebildet. Das formteilbasierte Wärmedämmmaterial ist dazu eingerichtet, vor dem Einsetzen des Anschlussmoduls in den Außenwandabschnitt um die Leitungsabschnitte und mögliche Leerrohre herum montiert zu werden. Das formteilbasierte Wärmedämmmaterial ist vorzugsweise partiell oder vollständig aus Mineralwolle, Styropor (in Kugelform oder als Schalungs-/Formteil), ausgeformtes Polyurethan (PU-Schaum), Glaswolle oder Glaswolle-Schalungen oder Schaumglas-Formteile, ausgebildet, um gute Formanpassbarkeit und gleichzeitig niedrige Wärmeleitung miteinander kombinieren zu können. Vorzugsweise weist das formteilbasierte Wärmedämmmaterial schallentkoppelnde und/oder schalldämpfende Eigenschaften bzw. schwingungsdämpfende Eigenschaften auf.

Es ist in bevorzugten Ausführungsformen auch vorgesehen, sowohl ein formteilbasiertes Wärmedämmmaterial einzusetzen, als auch etwaig verbleibende Volumina im Aufnahmeraum zwischen den Verschlusseinheiten mittels Einfüllens von Wärmedämmmaterial wie hier weiter oben beschrieben aufzufüllen.

Vorzugsweise ist der Leitungsabschnitt auf seiner Außenseite mit einer eigenen thermischen und/oder akustischen Isolierung versehen. Der Leitungsabschnitt weist demgemäß zusätzlich zu dem Wärmedämmmaterial des Anschlussmoduls auf seiner Außenseite eine eigene thermische Isolierung auf, welche vorzugsweise aus Wärmedämmstoff und/oder schallisolierendem Material ausgebildet ist. Vorzugsweise weist die Isolierung eine Dicke von mehreren Millimetern auf, und die Isolierung ist vorzugsweise dazu eingerichtet, unmittelbar mit den Durchgängen am Dichtkörper der ersten Verschlusseinheit abzuschließen.

Alternativ oder zusätzlich weist eine der Anschlussschnittstellen der Leitungsabschnitte vorzugsweise einen Schnellverbinder auf, vorzugsweise mit einem Dichtelement. Vorzugsweise weisen die Anschlussschnittstellen jeweils einen Schnellverbinder auf. Der bzw. die Schnellverbinder ist bzw. sind zum Anschluss an einen weiteren mit dem Außen- und/oder Innengerät in Kontakt bringbaren Leitungsabschnitt eingerichtet. Durch das Vorsehen von Schnellverbindern, wie etwa Schraubverbindern oder Schnellkupplungen, an den Anschlussschnittstellen ist die Installation vereinfacht.

Vorzugsweise weisen alle, insbesondere die fluidleitenden Anschlussschnittstellen Kennzeichnungen für einen mittels der Leitungsabschnitte umzusetzenden Vorlauf und/oder Rücklauf auf. Bei Verwendung von Schraubverbindern weisen jene vorzugsweise an den Leitungsabschnitten Gewinde mit entgegengesetzt verlaufenden Steigungen, also ein Rechts- und ein Linksgewinde, auf, wodurch eine Fehlinstallation von Außen- und Innengerät untereinander vermieden wird.

Bei Verwendung von Schraubverbindern sind die Anschlüsse der Leitungsabschnitte vorzugsweise mittels Schraubstopfen bzw. Dichtschrauben verschlossen, welche vor dem Anschließen von weiterführenden Leitungsabschnitten entfernt werden.

Die Erfindung betrifft in einem zweiten Aspekt eine Verbindungs-Anordnung eines Wärmeübertrager-Systems, mit einem Gebäude-Außenwandabschnitt, durch den eine Öffnung hindurch ausgebildet ist, einem auf der Außenseite des Außenwandabschnitts angeordneten Außengerät, einem auf der Innenseite des Außenwandabschnitts angeordneten Innengerät, und einem in der Öffnung angeordneten Anschlussmodul, welches das Außengerät und das Innengerät durch den Außenwandabschnitt hindurch miteinander verbindet.

Die Erfindung löst auch die dem erfindungsgemäßen Anschlussmodul zugrunde gelegte Aufgabe, indem das in der Öffnung angeordnete Anschlussmodul nach einer der vorstehend beschriebenen bevorzugten Ausführungsformen der Erfindung ausgebildet ist. Bei einer solchen erfindungsgemäßen Verbindungs-Anordnung eines Wärmeübertrager-Systems ist trotz der vereinfachten Ausgestaltung des in der Öffnung des Außenwandabschnitts angeordneten Anschlussmoduls einerseits eine verbesserte Abdichtung zwischen der Außen- und der Innenseite des Außenwandabschnitts und andererseits eine vorteilhaft isolierende Wirkung zwischen dem mindestens einen durch die Öffnung geführten Leitungsabschnitt und dem sich radial um den Leitungsabschnitt erstreckenden Außenwandabschnitt erreicht.

Der zweite Aspekt macht sich dieselben Vorteile zunutze wie der erste Aspekt, und bevorzugte Ausführungsformen des ersten Aspekts sind zugleich bevorzugte Ausführungsformen des zweiten Aspekts und umgekehrt, weswegen diesbezüglich zur Vermeidung von Wiederholungen auf die obigen Ausführungen verwiesen wird.

Gemäß einer bevorzugten Ausgestaltung ist in dem Aufnahmeraum, der durch die Wandfläche der Öffnung und das insbesondere in der Öffnung verspannte Anschlussmodul definiert ist, ein Wärmedämmmaterial angeordnet. Mithilfe des zwischen den Verschlusseinheiten und insbesondere den oder die sich durch die Verschlusseinheiten erstreckenden Leitungsabschnitte umgebenden Wärmedämmmaterials ist zum einen die Dichtheit der erfindungsgemäßen Verbindungs-Anordnung weiter verbessert und zum anderen sind die Leitungsabschnitte durch das sie umgebende Wärmedämmmaterial vorzugsweise schallisolierend von dem Außenwandabschnitt aufgenommen. Vorzugsweise werden mit dem Wärmedämmmaterial um den mindestens einen Leitungsabschnitt in der Öffnung undichte Stellen und damit verbundene Kältebrücken vermieden sind.

Vorzugsweise ist mit dem Anschlussmodul im Außenwandabschnitt Luftdichtheit nach DIN 4108-7 hergestellt. Das Wärmedämmmaterial ist in Richtung der die Öffnung begrenzenden Wandfläche derart schallisolierend, dass die im Betrieb des Wärmeübertragers am Außen- und/oder Innengerät entstehenden und von dem Anschlussmodul der Verbindungs-Anordnung in Form von Körperschall auf den Außenwandabschnitt übertragenen Schwingungen auf ein Minimum reduziert sind, die mit Messgeräten noch erfassbar sind, aber nicht mehr als störend wahrgenommen werden. Somit wird ein gewünschter Schallschutz nach DIN 4109 erfüllt.

In einer bevorzugten Ausführung ist das Wärmedämmmaterial ein Zwei-Komponenten-Schaum. Hierdurch wird eine einfache Verarbeitung und zugleich ein gutes Ausfüllen des die Leitungsabschnitte umgebenden, sich zwischen den Abschlusseinheiten erstreckenden Aufnahmeraums erreicht. Insbesondere unrunde Öffnungen im Wandabschnitt können mit einem Zwei-Komponenten-Schaum einfach und vor allem vollständig abdichtend ausgefüllt werden.

Alternativ kann ein schüttbares Wärmedämmmaterial verwendet oder das Wärmedämmmaterial aus einem oder mehreren Formteil(en) gebildet werden. Diesbezüglich können Materialien, wie beispielsweise Mineralwolle, Styropor (in Kugelform oder als Schalungs-/Formteile), ausgeformtes Polyurethan (sog. PU-Schaum), Glaswolle oder Glaswolle-Schalungen oder Schaumglas-Formteile, zum Einsatz kommen.

Die Erfindung betrifft gemäß einem dritten Aspekt ein Verfahren zum Installieren eines Anschlussmoduls in einem Gebäude-Außenwandabschnitt, durch den hindurch eine Öffnung ausgebildet ist, zum Anschluss an ein auf der Außenseite des Außenwandabschnitts angeordnetes Außengerät und ein auf der Innenseite des Außenwandabschnitts angeordnetes Innengerät.

### Geänderte Beschreibungsseiten (Reinschrift)

Das erfindungsgemäße Verfahren löst die eingangs beschriebene Aufgabe, wobei das Anschlussmodul nach einer der vorstehend beschriebenen Ausführungsformen ausgebildet ist, mit den Schritten: Bereitstellen oder Herstellen einer Öffnung in dem Gebäude-Außenwandabschnitt; Einsetzen und Montieren des Anschlussmoduls in der Öffnung des Außenwandabschnitts, so dass durch den Abstand zwischen den Verschlusseinheiten ein Aufnahmeraum in der Öffnung definiert wird; und Einbringen von Wärmedämmmaterial in den zumindest durch den Abstand zwischen den Verschlusseinheiten definierten Aufnahmeraum.

Das Montieren des Anschlussmoduls umfasst vorzugsweise das Abdichten zumindest einer Verschlusseinheit gegenüber dem Leitungsabschnitt und gegenüber der Öffnung im Gebäude-Außenwandabschnitt.

Das Verfahren umfasst vorzugsweise den Schritt des Anschließens von Innen- und Außengerät am Anschlussmodul, insbesondere mittels einer am Anschlussmodul ausgebildeten ersten und zweiten Anschlussschnittstelle.

Der dritte Aspekt macht sich dieselben Vorteile zunutze wie der erste und zweite Aspekt, und bevorzugte Ausführungsformen des ersten und zweiten Aspekts sind zugleich bevorzugte Ausführungsformen des dritten Aspekts und umgekehrt, weswegen diesbezüglich zur Vermeidung von Wiederholungen auf die obigen Ausführungen verwiesen wird.

Der Erfindung liegt die Erkenntnis zugrunde, dass sich mithilfe der erfindungsgemäßen Verfahrensschritte eine nicht nur für einen Installateur, sondern auch für einen Bauunternehmer mit wenigen Handgriffen ausführbare, einfach herstellbare fluiddichte Verbindungs-Anordnung herstellen lässt. Durch die leicht wiederholbare Installationsabfolge können Fehler bei der Montage vermieden werden, so dass nach der Installation der Verbindungs-Anordnung ein zufriedenstellendes Endprodukt vorliegt.

Üblicherweise wird in einem Gebäude-Außenwandabschnitt, in dem eine solche erfindungsgemäße Verbindungs-Anordnung installiert werden soll, eine Öffnung im Außenwandabschnitt oberhalb des Bodenniveaus, also überirdisch, erzeugt. Das kann in der Bauabfolge prinzipiell auf zwei unterschiedliche Vorgehensweisen geschehen: Entweder wird der betreffende Außenwandabschnitt vollständig hergestellt und anschließend, zu einem späteren Zeitpunkt, der Durchbruch darin erzeugt, oder der Außenwandabschnitt wird mit dem vorgesehenen Durchbruch in einem Arbeitsgang hergestellt.

Nach dem Bereitstellen oder Herstellen der Öffnung im Außenwandabschnitt wird ein erfindungsgemäßes Anschlussmodul in die Öffnung des Außenwandabschnitts eingesetzt und dieses dann fest innerhalb der Öffnung montiert. Zum Montieren wird vorzugsweise wenigstens eine der Verschlusseinheiten gegenüber der Öffnung, und insbesondere auch gegenüber dem sich durch die Öffnung erstreckenden Leitungsabschnitt, fluiddicht abgedichtet.

Vorzugsweise wird neben dem Abdichten einer ersten der Verschlusseinheiten gegenüber der Öffnung und dem Leitungsabschnitt die andere, insbesondere zweite innenseitig angeordnete Verschlusseinheit zumindest gegen den innenwandseitigen Bereich der Öffnung verspannt. Dadurch wird die zweite Verschlusseinheit zumindest gegenüber dem Außenwandabschnitt abgedichtet.

Das Verspannen der ersten und zweiten Verschlusseinheit erfolgt vorzugsweise mithilfe mindestens einer, vorzugsweise zweier Spanneinrichtungen, die insbesondere nacheinander am Anschlussmodul betätigt werden.

Das Abdichten der ersten Verschlusseinheit erfolgt vorzugsweise durch das Verspannen der ersten Verschlusseinheit in der Öffnung, wobei diese fest innerhalb der Öffnung im Außenwandabschnitt positioniert wird.

Bei einer alternativen Ausgestaltung mit den beiden bevorzugt auf den Wandflächen des Außenwandabschnittes in Anlage bringbaren Verschlusseinheiten erfolgt das Verspannen der ersten und zweiten Verschlusseinheit mit bevorzugt nur einer Spanneinrichtung.

Nach dem Montieren des Anschlussmoduls in der Öffnung des Außenwandabschnitts wird über eine Einfüllöffnung ein Wärmedämmmaterial in den durch den Abstand zwischen den Verschlusseinheiten definierten Aufnahmeraum eingefüllt. Der Aufnahmeraum wird vorzugsweise durch die beiden im Abstand zueinander angeordneten Verschlusseinheiten, den mindestens sich durch die Verschlusseinheiten und die Öffnung im Außenwandabschnitt sowie die die Öffnung im Außenwandabschnitt begrenzende Wandfläche definiert. Dieser Aufnahmeraum wird vorzugsweise nahezu vollständig mit dem vorzugsweise fließfähigen Wärmedämmmaterial, das beispielsweise ein Zwei-Komponenten-Schaum sein kann, ausgefüllt. Nach dem Abbinden des Wärmedämmmaterials ist dann die Abdichtfunktion des im Außenwandabschnitt angeordneten Anschlussmoduls weiter verbessert.

Eine alternative Ausführung des Verfahrens sieht vor, dass das Wärmedämmmaterial vor dem Einsetzen des Anschlussmoduls in die Öffnung um die Leitungsabschnitte zwischen den Verschlusseinheiten herum angeordnet wird und dann das mit Wärmedämmmaterial ausgerüstete Anschlussmodul in die Öffnung des Wandabschnitts eingesetzt wird. Das Montieren, insbesondere Verspannen und Abdichten des Anschlussmoduls gegenüber der Öffnung im Wandabschnitt erfolgt somit im Anschluss.

Vorzugsweise wird nach der Montage des Anschlussmoduls in der im Außenwandabschnitt überirdisch ausgebildeten Öffnung das außenseitig am Gebäude angeordnete Außengerät und das innerhalb des Gebäudes angeordnete Innengerät des Wärmeübertrager-Systems mittels den zu beiden Seiten angeordneten Anschlussschnittstellen untereinander verbunden. Jede Anschlussschnittstelle weist vorzugsweise einen Schraubverbinder für eine fluiddichtende Verbindung mit weiteren daran zu montierenden Leitungsabschnitten auf. Zudem können neben den fluidleitenden Leitungsabschnitten sich auch Strom- oder Signalleitungen durch die Öffnung im Außenwandabschnitt erstrecken, welche beispielsweise über etwaige an den Enden der Strom- oder Signalleitung angeordnete Steckverbinder direkt mit dem Außen- und/oder Innengerät verbunden werden können.

In einem weiteren Aspekt betrifft die Erfindung die Verwendung eines Anschlussmoduls, ausgebildet nach einer der vorstehend beschriebenen bevorzugten Ausführungsformen, zum fluidleitenden Verbinden eines außenseitig an einem Gebäude anordenbaren Außengeräts mit einem im Gebäude anordenbaren Innengerät eines Wärmeübertrager-Systems durch eine Öffnung in einem Gebäude-Außenwandabschnitt hindurch.

Die zum erfindungsgemäßen Anschlussmodul des ersten Aspekts, der erfindungsgemäßen Verbindungs-Anordnung des zweiten Aspekts, sowie des erfindungsgemäßen Verfahrens des dritten Aspekts machen sich dieselben Vorteile zunutze wie die erfindungsgemäße Verwendung. Die dazu beschriebenen bevorzugten Ausführungsformen bzw. Weiterbildungen sind zugleich auch bevorzugte Ausführungsformen der erfindungsgemäßen Verwendung und umgekehrt, weswegen diesbezüglich zur Vermeidung von Wiederholungen auf die obigen Ausführungen verwiesen wird.

Die Erfindung wird im Folgenden anhand eines bevorzugten Ausführungsbeispiels unter Bezugnahme auf die beigefügten Figuren näher beschrieben. Hierbei zeigen:
- Fig. 1:: eine Ansicht einer erfindungsgemäßen Verbindungs-Anordnung;
- Fig. 2:: eine Ansicht einer ersten Ausführungsform eines erfindungsgemäßen Anschlussmoduls;
- Fig. 3:: eine Ansicht der innenseitigen Verschlusseinheit des Anschlussmoduls nach Fig. 2;
- Fig. 4:: eine Ansicht des in eine Öffnung in einem Außenwandabschnitt eingesetzten Anschlussmoduls nach Fig. 2;
- Fig. 5:: eine Ansicht des in der Öffnung des Außenwandabschnitts montierten Anschlussmoduls nach Fig.2,
- Fig. 6:: eine Ansicht einer zweiten Ausführungsform eines erfindungsgemäßen Anschlussmoduls, und
- Fig. 7:: ein Wärmeübertrager-System mit einer Verbindungs-Anordnung gemäß Fig. 1 und einem Anschlussmodul gemäß den Fig. 2 bis 6.

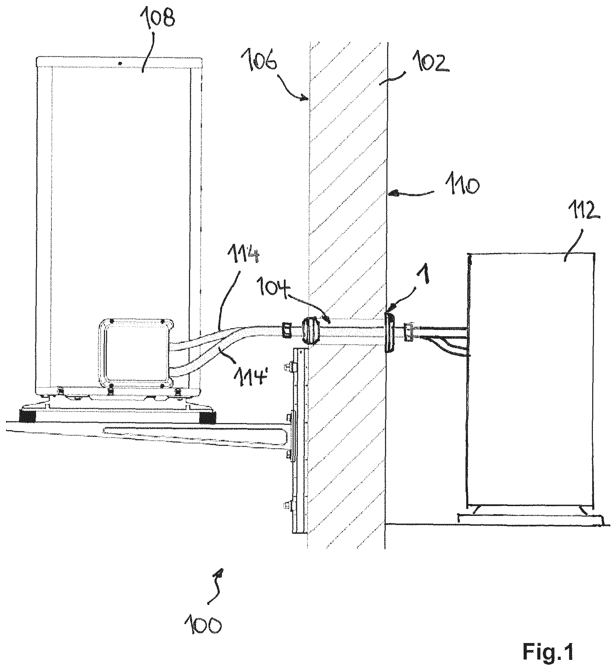

Fig. 1 zeigt eine Verbindungs-Anordnung 100 eines Wärmeübertrager-Systems, wie beispielsweise einer Wärmepumpe oder einer Klimaanlage, zum Aufheizen oder Kühlen eines Gebäudes. Die Verbindungs-Anordnung 100 umfasst einen Gebäude-Außenwandabschnitt 102, durch den hindurch eine überirdisch verlaufende Öffnung 104 ausgebildet ist. Auf der Außenseite 106 des Außenwandabschnitts 102 ist ein Außengerät 108 des Wärmeübertrager-Systems angeordnet. Auf der Innenseite 110 des Außenwandabschnitts 102 ist ein Innengerät 112 des Wärmeübertrager-Systems angeordnet. Außengerät 108 und Innengerät 112 sind über mindestens eine, vorliegend zwei Fluidleitungen 114, 114' fluidleitend miteinander verbunden. Ferner sind das Außen- und Innengerät 108, 112 über nicht näher dargestellte Strom- bzw. Signalleitungen für die Stromversorgung und die Ansteuerung des Außengeräts 108 verbunden.

Innerhalb der Öffnung 104 ist ein vorliegend schematisiert dargestelltes Anschlussmodul 1 angeordnet, mittels dessen die Verbindung von Außen- und Innengerät 108, 112 durch den Gebäude-Außenwandabschnitt 102 hindurch erfolgt. Mithilfe des erfindungsgemäßen Anschlussmoduls 1 wird die Installation einer gezeigten erfindungsgemäßen Verbindungs-Anordnung 100 vereinfacht. Zudem ermöglicht das Anschlussmodul 1 eine dauerhaft sichere Abdichtung im Bereich der Öffnung 104 des Außenwandabschnitts 102.

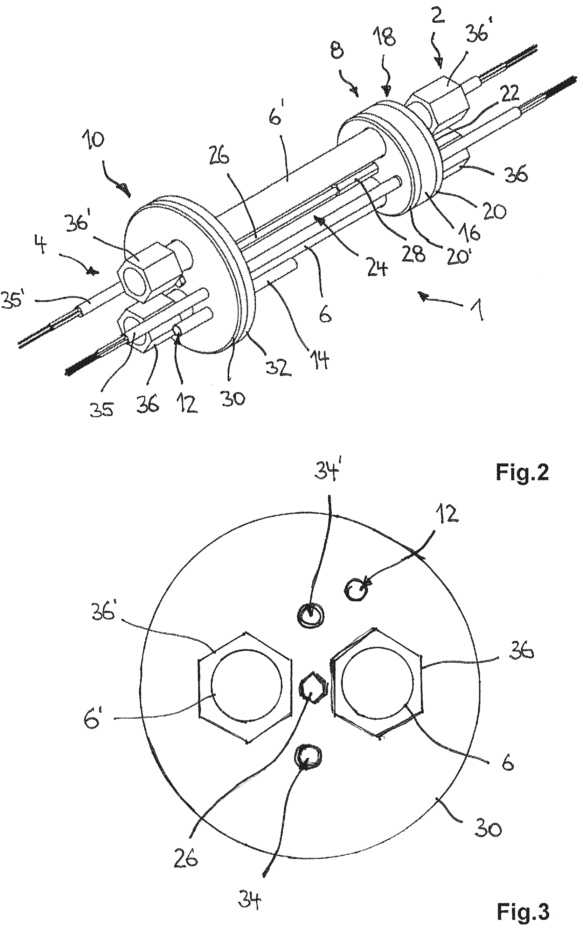

Fig. 2 zeigt eine vergrößerte Ansicht einer ersten Ausführung eines Anschlussmoduls 1. Das Anschlussmodul 1 weist eine erste Anschlussschnittstelle 2 für das Außengerät 108 und eine zweite Anschlussschnittstelle 4 für das Innengerät 112 auf. Das Anschlussmodul 1 umfasst ferner wenigstens eine, vorliegend zwei die erste und zweite Anschlussschnittstelle 2, 4 fluidleitend miteinander verbindende Leitungsabschnitte 6, 6'. Zudem umfasst das Anschlussmodul eine erste, dem außenwandseitigen Bereich der Öffnung 104 zugeordnete Verschlusseinheit 8 und eine zweite, dem innenwandseitigen Bereich der Öffnung 104 zugeordnete Verschlusseinheit 10. Jede Verschlusseinheit umfasst nicht näher dargestellte Durchgänge für die Leitungsabschnitte 6, 6'.

Wenigstens eine der beiden Verschlusseinheiten 8, 10 ist zum abdichtenden Durchtritt der Leitungsabschnitte 6, 6' und zum abdichtenden Abschluss gegenüber der Öffnung 104 im Gebäude-Außenwandabschnitt 102 eingerichtet. Vorliegend erfolgt mittels der ersten, dem außenwandseitigen Bereich der Öffnung 104 zugeordneten Verschlusseinheit 8 das Abdichten gegenüber den Leitungsabschnitten 6, 6' und gegenüber der Öffnung 104 im Außenwandabschnitt 102.

Beide Verschlusseinheiten 8, 10 sind entlang der Leitungsabschnitte 6, 6' im Abstand zueinander angeordnet. Eine der Verschlusseinheiten 8, 10, insbesondere die dem innenwandseitigen Bereich der Öffnung 104 zugeordnete Verschlusseinheit 10, weist eine Einfüllöffnung für zumindest ein Wärmedämmmaterial auf. Die Einfüllöffnung ist als ein sich von außerhalb der Öffnung in das Innere der Öffnung hinein erstreckender Einfüllschlauch 14 ausgebildet.

Die außenseitig angeordnete Verschlusseinheit 8 weist zum Abdichten gegenüber der Leitungsabschnitte 6, 6' und der Öffnung 104 einen die Leitungsabschnitte umgebenden Dichtkörper 16 auf. Dem Dichtkörper 16 ist eine Spanneinrichtung 18 zum axialen Verspannen des Dichtkörpers 16 zugeordnet. Die Spanneinrichtung 18 weist zwei Spannkörper 20, 20' auf, die zu beiden Seiten des Dichtkörpers 16 angeordnet sind. Die Spannkörper 20, 20' sind mittels mindestens eines oder mehrerer Spannelemente 22 miteinander verbunden.

Mit Betätigen der Spanneinrichtung 18 werden die Spannkörper 20, 20' axial aufeinander zu bewegt und der zwischen den Spannkörpern 20, 20' befindliche Dichtkörper 16 axial gestaucht. Der aus einem elastisch verformbaren Material, wie beispielsweise Silikon, EPDM, Gummi wie z. B. NBR, Zellkautschuk oder andere geeignete Elastomerdichtungsmaterialien, bestehende Dichtkörper dehnt sich durch das axiale Stauchen in radialer Richtung nach innen und nach außen aus, wodurch die Abdichtung mit der Öffnung 104 wie auch mit den Leitungsabschnitten 6, 6' bewirkt ist.

Die Spanneinrichtung 18 ist eine erste Spanneinrichtung und zusätzlich zu der ersten Spanneinrichtung ist eine zweite Spanneinrichtung 24 zum Verspannen der zweiten, innenwandseitig angeordneten Verschlusseinheit 10 gegen die Innenseite 110 des Außenwandabschnitts 102 vorgesehen. Die zweite Spanneinrichtung 24 umfasst ein Spannmittel 26, das sich durch die zweite Verschlusseinheit 10 hindurch erstreckt und mit einem an der ersten Spanneinrichtung 18 angeordneten Befestigungsabschnitt 28 zusammenwirkt.

Der Befestigungsabschnitt 28 ist insbesondere am innenseitig angeordneten Spannkörper 20 der ersten Spanneinrichtung 18 axial in die Öffnung 104 des Außenwandabschnitts 102 vorstehend angeordnet. Das Spannmittel 26 ist in der vorliegend gezeigten Ausführung als Spannschraube ausgebildet, die mit einem nicht näher gezeigten Außengewinde mit einem an dem Befestigungsabschnitt 28 nicht näher gezeigten Innengewinde korrespondiert. Mit Betätigen des Spannmittels 26, was von der Innenseite des Außenwandabschnitts 102 möglich ist, wird die zweite Verschlusseinheit 10 in Richtung der ersten Verschlusseinheit 8 bewegt und gegen die Innenseite 110 des Außenwandabschnitts 102 verspannt.

Die zweite Verschlusseinheit 10 weist in der vorliegend gezeigten Ausführung eine sich außerhalb der Öffnung erstreckende Dichtscheibe 30 mit einem sich gegen die Innenseite 110 des Außenwandabschnitts 102 anlegenden Dichtelement 32 auf. Fig. 3 zeigt eine Detailansicht der zweiten Verschlusseinheit 10 mit ihrer Dichtscheibe 30. Neben den Durchgängen für die Leitungsabschnitte 6, 6' weisen die erste und zweite Verschlusseinheit Durchgänge 34, 34' für Strom- oder Signalleitungen auf. Die Durchgänge 34, 34' weisen einen an den Durchmesser der nicht näher gezeigten Strom- oder Signalleitungen angepasste Abmessungen, insbesondere Durchmesser auf.

In der gezeigten Ausführung sind die Leitungsabschnitte 6, 6' an ihrer Außenseite mit einer Isolierung versehen. Die Anschlussschnittstellen 2, 4 an jedem Ende der Leitungsabschnitte 6, 6' weisen einen mit dem Leitungsabschnitt zusammenwirkenden Schraubverbinder 36 auf, der mit einem korrespondierenden Schraubverbinder eines weiteren mit dem Anschlussmodul 1 zu koppelnden Leitungsabschnitts zusammenwirkt.

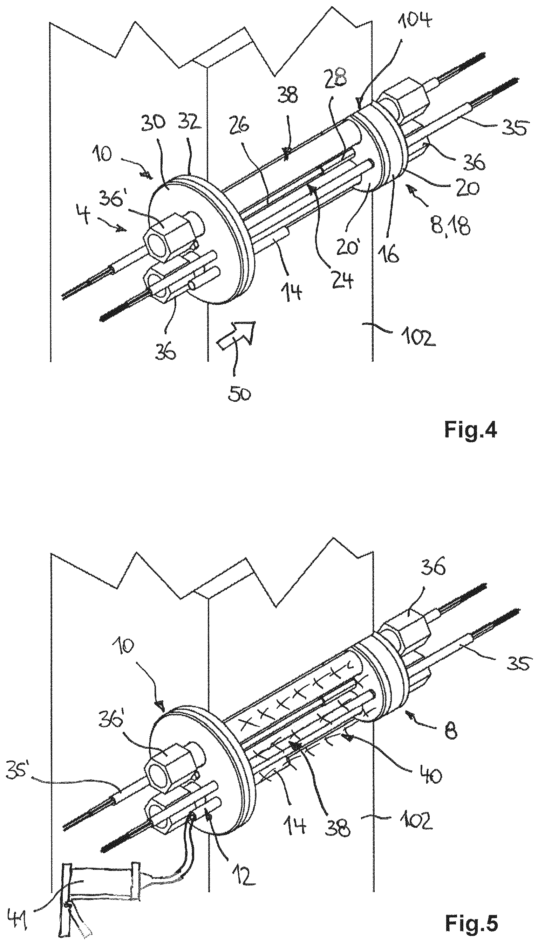

Die Fig. 4 und 5 zeigen in schematisierter Form ein Verfahren zum Installieren einer Verbindungs-Anordnung 100, insbesondere eines Anschlussmoduls 1 innerhalb einer Öffnung 104 eines Außenwandabschnitts. Das Verfahren umfasst die Schritte, Bereitstellen oder Herstellen einer Öffnung 104 in einem Gebäude-Außenwandabschnitt 102. Anschließend erfolgt, wie aus Fig. 4 zu entnehmen, das Einsetzen des Anschlussmoduls 1 in die Öffnung 104 (Richtungspfeil 50) des Außenwandabschnitts und das anschließende Montieren des Anschlussmoduls 1.

Vorzugsweise erfolgt mit dem Montieren des Anschlussmoduls 1 das Abdichten zumindest einer Verschlusseinheit 8, 10 gegenüber den zwei Leitungsabschnitten 6, 6' und der Öffnung 104 im Gebäude-Außenwandabschnitt 102. Zum Abdichten wird insbesondere die erste Spanneinrichtung 18 an der im außenwandseitigen Bereich der Öffnung 104 angeordneten Verschlusseinheit 8 von der Außenseite 106 des Außenwandabschnitts 102, insbesondere von außerhalb der Öffnung 104 aus betätigt. Mit dem Verspannen des Dichtkörpers 16 an der Verschlusseinheit 8 erfolgt neben dem Abdichten gegenüber den Leitungsabschnitten 6, 6' und der Öffnung 104 das Positionieren des Anschlussmoduls 1 in der Öffnung 104. Die Verschlusseinheit 8 wird etwa mit der Außenseite 106 des Außenwandabschnitts 102 bündig abschließend in der Öffnung 104 montiert.

Nach dem Abdichten und Festlegen der Verschlusseinheit 8 wird insbesondere die zweite Verschlusseinheit 10 mithilfe der zweiten Spanneinrichtung 24 gegen die Innenseite 110 des Außenwandabschnitts 102 verspannt. Die zweite Spanneinrichtung 24 ist dabei von der Innenseite 110 aus betätigbar, vorzugsweise ebenfalls von außerhalb der Öffnung 104.

Die beiden Verschlusseinheiten 8, 10 sind derart voneinander beabstandet, dass die Verschlusseinheiten 8, 10, der mindestens eine, die vorliegend zwei Leitungsabschnitte 6, 6' und die Wandfläche der Öffnung 104 einen Aufnahmeraum 38 definieren, der zum Aufnehmen eines Wärmedämmmaterials bestimmt ist. Wie aus Fig. 5 ersichtlich, wird vorzugsweise nach dem Montieren des Anschlussmoduls 1 über die Einfüllöffnung 12 an der zweiten Verschlusseinheit 10 ein Wärmedämmmaterial 40 in Form eines Zwei-Komponenten-Schaums in den Aufnahmeraum 38 eingegeben. Nach dem Abbinden/Aushärten des Wärmedämmmaterials ist neben einer verbesserten Abdichtfunktion zwischen Außenseite 106 und Innenseite 110 des Außenwandabschnitts 102 innerhalb der Öffnung 104 ein Isolierbereich erzeugt, durch den etwaige Kältebrücken im Bereich des Anschlussmoduls 1 minimiert werden.

Abschließend werden am Anschlussmodul 1, insbesondere an den ersten und zweiten Anschlussschnittstellen 2, 4, mittels der an den Leitungsabschnitten 6, 6' angeordneten Schraubverbindern 36, entsprechende weiterführende Leitungsabschnitte montiert, um eine in Fig. 1 gezeigte erfindungsgemäße Verbindungs-Anordnung 100 fertigzustellen.

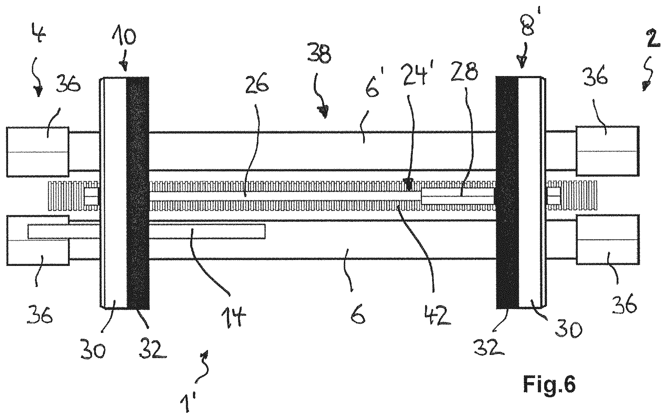

Fig. 6 zeigt eine Ansicht einer zweiten Ausführung eines Anschlussmoduls 1'. Das Anschlussmodul 1' weist ebenfalls eine erste Anschlussschnittstelle 2 für das Außengerät 108 und eine zweite Anschlussschnittstelle 4 für das Innengerät 112 auf. Das Anschlussmodul 1' umfasst ferner wenigstens eine, vorliegend zwei die erste und zweite Anschlussschnittstelle 2, 4 fluidleitend miteinander verbindende Leitungsabschnitte 6, 6'. Zudem umfasst das Anschlussmodul eine erste, dem außenwandseitigen Bereich der Öffnung 104 zugeordnete Verschlusseinheit 8' und eine zweite, dem innenwandseitigen Bereich der Öffnung 104 zugeordnete Verschlusseinheit 10. Jede Verschlusseinheit umfasst nicht näher dargestellte Durchgänge für die Leitungsabschnitte 6, 6'.

Eine der beiden, bevorzugt beide Verschlusseinheiten 8', 10 ist/sind zum abdichtenden Durchtritt der Leitungsabschnitte 6, 6' und zum abdichtenden Abschluss gegenüber der Öffnung 104 im Gebäude-Außenwandabschnitt 102 eingerichtet.

Beide Verschlusseinheiten 8, 10 sind entlang der Leitungsabschnitte 6, 6' im Abstand zueinander angeordnet. Eine der Verschlusseinheiten 8, 10, insbesondere die dem innenwandseitigen Bereich der Öffnung 104 zugeordnete Verschlusseinheit 10, weist eine Einfüllöffnung für zumindest ein Wärmedämmmaterial auf. Die Einfüllöffnung ist als ein sich von außerhalb der Öffnung in das Innere der Öffnung hinein erstreckender Einfüllschlauch 14 ausgebildet.

Die erste und zweite Verschlusseinheit 8', 10 weist in der vorliegend gezeigten Ausführung eine sich außerhalb der Öffnung erstreckende Dichtscheibe 30 mit einem sich gegen die Außenseite 106 und die Innenseite 110 des Außenwandabschnitts 102 anlegenden Dichtelement 32 auf. Neben den Durchgängen für die Leitungsabschnitte 6, 6' weisen die erste und zweite Verschlusseinheit nicht näher gezeigte Durchgänge für ein oder mehrere Strom- oder Signalleitungen aufnehmende Leerrohre 42 auf. Die Durchgänge weisen einen an den Durchmesser der Leerrohre 42 angepasste Abmessungen, insbesondere Innendurchmesser auf.

Auch in dieser Ausführung können die Leitungsabschnitte 6, 6' an ihrer Außenseite mit einer Isolierung versehen sein. Die Anschlussschnittstellen 2, 4 an jedem Ende der Leitungsabschnitte 6, 6' weisen einen mit dem Leitungsabschnitt zusammenwirkenden Schraubverbinder 36 auf, der mit einem korrespondierenden Schraubverbinder eines weiteren mit dem Anschlussmodul 1' zu koppelnden Leitungsabschnitts 114, 114' (Fig.1) zusammenwirkt.

Den Verschlusseinheiten 8', 10 ist nur eine Spanneinrichtung 24' zum Verspannen der ersten, außenwandseitig angeordneten Verschlusseinheit 8' und der zweiten, innenwandseitig angeordneten Verschlusseinheit 10 gegen die Außen- und Innenseite 106, 110 des Außenwandabschnitts 102 zugeordnet. Die zweite Spanneinrichtung 24' umfasst ein Spannmittel 26, das sich durch die zweite Verschlusseinheit 10 hindurch erstreckt und mit einem an der ersten Verschlusseinheit 8' angeordneten Befestigungsabschnitt 28 zusammenwirkt.

Der Befestigungsabschnitt 28 ist insbesondere innenseitig an der Verschlusseinheit 8' in den Aufnahmeraum 38 vorstehend angeordnet. Das Spannmittel 26 ist in der vorliegend gezeigten Ausführung als Spannschraube ausgebildet, die mit einem nicht näher gezeigten Außengewinde in ein an dem Befestigungsabschnitt 28 nicht näher gezeigtes Innengewinde eingreift. Mit Betätigen des Spannmittels 26, was von der Innenseite 110 des Außenwandabschnitts 102 möglich ist, werden die erste und zweite Verschlusseinheit 8', 10 aufeinander zu bewegt und jeweils gegen die Außenseite 106 bzw. Innenseite 110 des Außenwandabschnitts 102 verspannt.

Über den Einfüllschlauch 14 kann nach dem Montieren des Anschlussmoduls 1' ein Wärmedämmmaterial eingefüllt oder alternativ vor dem Einsetzen des Anschlussmoduls 1' Wärmedämmmaterial, beispielsweise als vorgefertigtes Formteil, um die Leitungsabschnitte 6, 6' herum angeordnet werden.

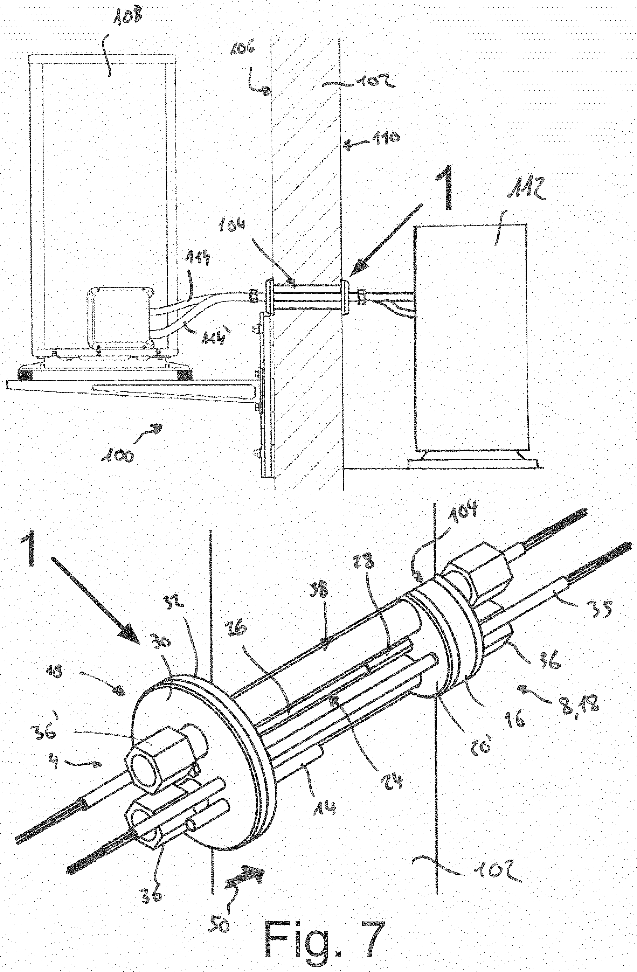

Fig. 7 zeigt eine Zusammenstellung der Fig. 1 und 4 für die Zwecke der Zusammenfassung. Zur Vermeidung von Wiederholungen wird diesbezüglich auf die obigen Ausführungen zu jenen Figuren verwiesen.

### Bezugszeichenliste:

- 1, 1': Anschlussmodul
- 2, 4: Anschlussschnittstelle
- 6, 6': Leitungsabschnitt
- 8, 8', 10: Verschlusseinheit
- 12: Einfüllöffnung
- 14: Einfüllschlauch
- 16: Dichtkörper
- 18: erste Spanneinrichtung
- 20, 20': Spannkörper
- 22: Spannelement
- 24: zweite Spanneinrichtung
- 24': Spanneinrichtung
- 26: Spannmittel
- 28: Befestigungsabschnitt
- 30: Dichtscheibe
- 32: Dichtelement
- 34, 34': Durchgang
- 36: Schraubverbinder
- 38: Aufnahmeraum
- 40: Wärmedämmmaterial
- 42: Leerrohr
- 50: Richtungspfeil
- 100: Verbindungs-Anordnung
- 102: Gebäude-Außenwandabschnitt
- 104: Öffnung
- 106: Außenseite
- 108: Außengerät
- 110: Innenseite
- 112: Innengerät
- 114, 114': Fluidleitung

## Patentansprüche

1. Anschlussmodul (1, 1') zum fluidleitenden Verbinden eines Außengeräts (108) mit einem Innengerät (112) eines Wärmeübertrager-Systems durch eine Öffnung (104) in einem Gebäude-Außenwandabschnitt (102) hindurch, mit
einer ersten Anschlussschnittstelle (2) für das Außengerät (108) und einer zweiten Anschlussschnittstelle (4) für das Innengerät (112),
wenigstens einem in die Öffnung (104) in dem Gebäude-Außenwandabschnitt (102) einsetzbaren, die erste und zweite Anschlussschnittstelle (2, 4) fluidleitend miteinander verbindenden Leitungsabschnitt (6, 6'),
einer ersten Verschlusseinheit (8, 8') und einer zweiten Verschlusseinheit (10) mit jeweils einem oder mehreren Durchgängen für den Leitungsabschnitt (6, 6'), wobei
wenigstens eine der beiden Verschlusseinheiten (8, 8', 10), und vorzugweise beide, zum abdichtenden Durchtritt des Leitungsabschnitts (6, 6') und zum abdichtenden Abschluss gegenüber der Öffnung (104) im Gebäude-Außenwandabschnitt (102) eingerichtet ist, und wobei
die beiden Verschlusseinheiten (8, 8', 10) entlang des Leitungsabschnitts (6, 6') zueinander beabstandet angeordnet sind und zwischen sich einen Aufnahmeraum (38) definieren, der zur Aufnahme von Wärmedämmmaterial (40) eingerichtet ist.

2. Anschlussmodul (1, 1') nach Anspruch 1,
**dadurch gekennzeichnet, dass** die erste und/oder zweite Verschlusseinheit (8, 8', 10) zum Durchtritt des Leitungsabschnitts (6, 6') und zum Abschluss gegenüber der Öffnung (104) im Gebäude-Außenwandabschnitt (102) einen den Leitungsabschnitt (6, 6') umgebenden Dichtkörper (16) aufweist.

3. Anschlussmodul (1, 1') nach Anspruch 2,
**dadurch gekennzeichnet, dass** dem Dichtkörper (16) mindestens eine Spanneinrichtung (18) zum axialen Verspannen des Dichtkörpers (16) zugeordnet ist, wobei vorzugsweise die erste und/oder zweite Verschlusseinheit (8, 8', 10) den Dichtkörper (16) mit der ihm zugeordneten Spanneinrichtung (18) aufweist.

4. Anschlussmodul (1, 1') nach Anspruch 3,
**dadurch gekennzeichnet, dass** die Spanneinrichtung (18) in einem in die Öffnung (104) eingesetzten Zustand des Anschlussmoduls (1, 1') von der Außenseite (106) und/oder Innenseite (110) des Außenwandabschnitts (102) betätigbar ist, vorzugsweise von außerhalb der Öffnung (104).

5. Anschlussmodul (1, 1') nach Anspruch 3 oder 4,
**dadurch gekennzeichnet, dass** die Spanneinrichtung (18) in axialer Richtung zwei zu beiden Seiten des Dichtkörpers (16) angeordnete Spannkörper (20, 20') aufweist, wobei die Spannkörper (20, 20') mittels eines oder mehrere Spannelemente (22) miteinander verbunden sind.

6. Anschlussmodul (1, 1') nach einem der Ansprüche 3 bis 5,
**dadurch gekennzeichnet, dass** die Spanneinrichtung (18) eine erste Spanneinrichtung ist, und zusätzlich eine zweite Spanneinrichtung (24) zum Verspannen der zweiten Verschlusseinheit (8, 10) vorgesehen ist, wobei vorzugsweise
die zweite Spanneinrichtung (24) mindestens ein Spannmittel (26) aufweist, das vorzugsweise mit einem an der ersten Spanneinrichtung (24) vorgesehenen Befestigungsabschnitt (28) zusammenwirkt, wobei weiter vorzugsweise
das mindestens eine Spannmittel (26) sich durch die zweite Verschlusseinheit (10) erstreckt und von der Innenseite (110) des Außenwandabschnitts (102) betätigbar ist, vorzugsweise von außerhalb der Öffnung (104).

7. Anschlussmodul (1, 1') nach einem der vorstehenden Ansprüche,
**dadurch gekennzeichnet, dass** die erste und/oder die zweite Verschlusseinheit (8', 10) eine sich außerhalb der Öffnung (104) erstreckende Dichtscheibe (30) mit einem Dichtelement (32) aufweist, das dazu eingerichtet ist, sich gegen die Außenseite (106) und/oder Innenseite (110) des Außenwandabschnitts (102) abdichtend anzulegen.

8. Anschlussmodul (1') nach einem der vorstehenden Ansprüche,
**dadurch gekennzeichnet, dass** die erste und zweite Verschlusseinheit (8, 10) eine einzige Spanneinrichtung (24') aufweisen, welche zum Verspannen der ersten und zweiten Verschlusseinheit (8, 10) gegen den innen- und außenwandseitigen Bereich des Außenwandabschnitts (102) vorgesehen ist.

9. Anschlussmodul (1, 1') nach einem der vorstehenden Ansprüche,
wobei zwei fluidleitende Leitungsabschnitte (6, 6') vorgesehen sind, und die Verschlusseinheiten (8, 8', 10) einen oder mehrere Durchgänge (34, 34') für eine Strom- oder Signalleitung oder die Strom- oder Signalleitung aufnehmende Leerrohre (42) aufweisen.

10. Anschlussmodul (1, 1') nach einem der vorstehenden Ansprüche,
wobei eine der beiden Verschlusseinheiten (8, 8',10) eine Einfüllöffnung (12) für ein in den Aufnahmeraum (38) einzubringendes Wärmedämmmaterial (40) aufweist.

11. Anschlussmodul (1, 1') nach einem der vorstehenden Ansprüche,
**dadurch gekennzeichnet, dass** das Wärmedämmmaterial (40) aus einem oder mehreren zum Einsetzen in den Aufnahmeraum (38) eingerichteten Formteilen gebildet ist.

12. Anschlussmodul (1, 1') nach einem der vorstehenden Ansprüche,
wobei der Leitungsabschnitt (6, 6') auf seiner Außenseite mit einer Isolierung versehen ist; und/oder mindestens eine der Anschlussschnittstellen (2, 4) einen Schraubverbinder (36) aufweist, vorzugsweise mit einem Dichtelement.

13. Verbindungs-Anordnung (100) eines Wärmeübertrager-Systems, mit
- einem Gebäude-Außenwandabschnitt (102), durch den eine Öffnung (104) hindurch ausgebildet ist,
- einem auf der Außenseite (106) des Außenwandabschnitts (102) angeordneten Außengerät (108),
- einem auf der Innenseite (110) des Außenwandabschnitts (102) angeordneten Innengerät (112), und
- einem in der Öffnung (104) angeordneten Anschlussmodul (1, 1') nach einem der Ansprüche 1 bis 12, mittels dessen das Außengerät (108) und das Innengerät (112) durch den Außenwandabschnitt (102) hindurch miteinander verbunden sind.

14. Verfahren zum Installieren eines Anschlussmoduls (1, 1') nach einem der Ansprüche 1 bis 12 und/oder einer Verbindungs-Anordnung (100) nach Anspruch 13, in einem Gebäude-Außenwandabschnitt (102), durch den hindurch eine Öffnung (104) ausgebildet ist, zum Anschluss an ein auf der Außenseite (106) des Außenwandabschnitts (102) angeordnetes Außengerät (108) und an ein auf der Innenseite (110) des Außenwandabschnitts (102) angeordnetes Innengerät (112), umfassend die Schritte:
- Bereitstellen oder Herstellen einer Öffnung (104) in dem Gebäude-Außenwandabschnitt (102);
- Einsetzen und Montieren des Anschlussmoduls (1, 1') in der Öffnung (104) des Außenwandabschnitts (102), so dass durch einen Abstand zwischen den Verschlusseinheiten (8, 8', 10) ein Aufnahmeraum (38) in der Öffnung (104) definiert wird; und
- Einbringen von Wärmedämmmaterial (40) in den zumindest durch den Abstand zwischen den Verschlusseinheiten (6, 6') definierten Aufnahmeraum (38).

15. Verfahren nach Anspruch 14, umfassend einen, mehrere oder sämtliche der nachfolgend angeführten Schritte:
- wobei das Montieren des Anschlussmoduls (1) das Abdichten zumindest einer Verschlusseinheit (8, 10) gegenüber dem Leitungsabschnitt (6, 6') und der Öffnung (104) im Gebäude-Außenwandabschnitt (102) umfasst;
- Einbringen des Wärmedämmmaterials (40) vor dem Einsetzen des Anschlussmoduls (1, 1') in die Öffnung (104) oder nach dem Montieren des Anschlussmoduls (1, 1') in der Öffnung (104) in den durch die Verschlusseinheit (8, 8', 10) definierten Aufnahmeraum (38), und
- Anschließen von Innen und Außengerät (108, 112) am Anschlussmodul (1, 1'), insbesondere mittels dessen erster und zweiter Anschlussschnittstelle (2, 4).

16. Verwendung eines Anschlussmoduls (1, 1'), ausgebildet nach einem der Ansprüche 1 bis 12, zum fluidleitenden Verbinden eines außenseitig an einem Gebäude anordenbaren Außengeräts (108) mit einem im Gebäude anordenbaren Innengerät (112) eines Wärmeübertrager-Systems durch eine Öffnung (104) in einem Gebäude-Außenwandabschnitt (102).

## Claims

1. A connection module (1, 1') for connecting an outdoor unit (108) of a heat exchanger system with an indoor unit (112) in a fluid-conducting manner through an opening (104) in an exterior building wall section (102), comprising
a first connection interface (2) for the outdoor unit (108) and a second connection interface (4) for the indoor unit (112),
at least one line section (6, 6') which is insertable into the opening (104) in the exterior building wall section (102) and which connects the first and second connection interfaces (2, 4) to each other in a fluid-conducting manner,
a first closing unit (8, 8') and a second closing unit (10), each having one or more passageways for the line section (6, 6'),
at least one of the two closing units (8, 8', 10), and preferably both, being configured to produce a sealing passage of the line section (6, 6') and a sealing closure with respect to the opening (104) in the exterior building wall section (102), and wherein
the two closing units (8, 8', 10) are spaced apart from each other along the line section (6, 6') and define between themselves a receiving space (38), which is configured to receive thermal insulation material (40).

2. The connection module (1, 1') according to claim 1,
**characterized in that** the first and/or second closing unit (8, 8', 10) for passage of the line section (6, 6') and for closing with respect to the opening (104) in the exterior building wall section (102) has a sealing body (16) surrounding the line section (6, 6').

3. The connection module (1, 1') according to claim 2,
**characterized in that** at least one clamping device (18) for axial clamping of the sealing body (16) is associated with the sealing body (16), wherein preferably the first and/or second closing unit (8, 8', 10) includes the sealing body (16) with the clamping device (18) associated therewith.

4. The connection module (1, 1') according to claim 3,
**characterized in that** when the connection module (1, 1') is inserted into the opening (104), the clamping device (18) can be actuated from the outside (106) and/or inside (110) of the exterior wall section (102), preferably from outside the opening (104).

5. The connection module (1, 1') according to claim 3 or 4,
**characterized in that** the clamping device (18) has two clamping bodies (20, 20') arranged on both sides of the sealing body (16) in the axial direction, wherein the clamping bodies (20, 20') are connected with each other by means of one or more clamping elements (22).

6. The connection module (1, 1') according to one of claims 3 to 5,
**characterized in that** the clamping device (18) is a first clamping device, and additionally a second clamping device (24) is provided for clamping the second closing unit (8, 10), preferably wherein
the second clamping device (24) has at least one clamping means (26), which preferably cooperates with a fastening section (28) provided on the first clamping device (24), further preferably wherein
the at least one clamping means (26) extends through the second closing unit (10) and is actuatable from the inside (110) of the exterior wall section (102), preferably from outside the opening (104).

7. The connection module (1, 1') according to one of the preceding claims,
**characterized in that** the first and/or the second closing unit (8', 10) has a sealing washer (8) extending outside the opening (104) with a sealing element (32), which is configured to rest in a sealing manner against the outside (104) and/or inside (110) of the exterior wall section (32).

8. The connection module (1, 1') according to one of the preceding claims,
**characterized in that** the first and second closing unit (8, 10) have a single clamping device (24'), which is provided for clamping the first and second closing unit (8, 10) against the inner and outer exterior wall region of the exterior wall section (102).

9. The connection module (1, 1') according to one of the preceding claims,
wherein two fluid-conducting line sections (6, 6') are provided, and the closing units (8, 8', 10) have one or more passageways (34, 34') for a power or signal line or empty conduits (42) for receiving the power or signal line.

10. The connection module (1, 1') according to one of the preceding claims,
wherein one of the two closing units (8, 8',10) has a filling opening (12) for a thermal insulation material (40) to be introduced into the receiving space (38).

11. The connection module (1, 1') according to one of the preceding claims,
**characterized in that** the thermal insulation material (40) is made up of one or more molded parts configured to be inserted into the receiving space (38).

12. The connection module (1, 1') according to one of the preceding claims,
wherein the line section (6, 6') is insulated on its outside; and/or at least one of the connection interfaces (2, 4) has a screw connector (36), preferably with a sealing element.

13. A connection assembly (100) of a heat exchanger system, comprising
- an exterior building wall section (102) through which an opening (104) is formed,
- an outdoor unit (108) located on the outside (106) of the exterior wall section (102),
- an indoor unit (112) located on the inside (110) of the exterior wall section (102), and
- a connection module (1, 1') according to one of claims 1 bis 12 arranged in the opening (104) by means of which the outdoor unit (108) and the indoor unit (112) are connected to each other through the exterior wall section (102).

14. A method for installing a connection module (1, 1') according to one of claims 1 to 12 and/or a connection assembly (100) according to claim 13 in an exterior building wall section (102) through which an opening (104) is formed, for connecting to an outdoor unit (108) located on the outside (106) of the exterior wall section (102) and to an indoor unit (112) located on the inside (110) of the exterior wall section (102), comprising the steps:
- providing or producing an opening (104) in the exterior building wall section (102);
- inserting and mounting the connection module (1, 1') in the opening (104) of the exterior wall section (102) so that a receiving space (38) in the opening (104) is defined by a distance between the closing units (8, 8', 10); and
- introducing thermal insulation material (40) into the receiving space (38) defined at least by the distance between the closing units (6, 6').

15. The method according to claim 14, comprising one, some, or all of the following steps:
- wherein the mounting of the connection module (1) comprises sealing at least one closing unit (8, 10) with respect to the line section (6, 6') and the opening (104) in the exterior building wall section (102);
- inserting the thermal insulation material (40) into the receiving space (38) defined by the closing unit (8, 8', 10) before inserting the connection module (1, 1') into the opening (104) or after mounting the connection module (1, 1') in the opening (104); and
- connecting the indoor and outdoor unit (108, 112) to the connection module (1, 1'), in particular by means of their first and second connection interface (2, 4).

16. A use of a connection module (1, 1') embodied according to one of claims 1 to 12 for connecting an outdoor unit (108) to be arranged on the outside of a building in fluid-conducting manner with an indoor unit (112) of a heat exchanger system to be arranged in the building through an opening (104) in an exterior building wall section (102).

## Revendications

1. Module de raccordement (1, 1') pour raccorder, en communication de fluide, un appareil extérieur (108) à un appareil intérieur (112) d'un système d'échangeur de chaleur à travers une ouverture (104) dans une section (102) de paroi extérieure de bâtiment, comportant
une première interface de raccordement (2) pour l'appareil extérieur (108) et une seconde interface de raccordement (4) pour l'appareil intérieur (112),
au moins une section de conduite (6, 6') reliant entre elles en communication de fluide la première et la seconde interface de raccordement (2, 4) pouvant être insérée dans l'ouverture (104) dans la section (102) de paroi extérieure de bâtiment,
une première unité de fermeture (8, 8') et une seconde unité de fermeture (10) comportant chacune un ou plusieurs passages pour la section de conduite (6, 6'), dans lequel
au moins l'une des deux unités de fermeture (8, 8', 10), et de préférence les deux, est destinée à assurer le passage étanche de la section de conduite (6, 6') et pour assurer l'obturation étanche par rapport à l'ouverture (104) dans la section (102) de paroi extérieure de bâtiment, et dans lequel
les deux unités de fermeture (8, 8', 10) sont agencées espacées l'une de l'autre le long de la section de conduite (6, 6') et définissent entre elles un espace de réception (38) qui est destiné à recevoir du matériau d'isolation thermique (40).

2. Module de raccordement (1, 1') selon la revendication 1,
**caractérisé en ce que** la première et/ou la seconde unité de fermeture (8, 8', 10) présente un corps d'étanchéité (16) entourant la section de conduite (6, 6') pour le passage de la section de conduite (6, 6') et pour l'obturation par rapport à l'ouverture (104) dans la section (102) de paroi extérieure de bâtiment.

3. Module de raccordement (1, 1') selon la revendication 2,
**caractérisé en ce que** le corps d'étanchéité (16) est associé à au moins un dispositif de serrage (18) pour le serrage axial du corps d'étanchéité (16), dans lequel de préférence la première et/ou la seconde unité de fermeture (8, 8', 10) présente le corps d'étanchéité (16) avec le dispositif de serrage (18) qui lui est associé.

4. Module de raccordement (1, 1') selon la revendication 3,
**caractérisé en ce que** le dispositif de serrage (18) est actionnable dans un état inséré dans l'ouverture (104) du module de raccordement (1, 1') depuis le côté extérieur (106) et/ou le côté intérieur (110) de la section (102) de paroi extérieure, de préférence depuis l'extérieur de l'ouverture (104).

5. Module de raccordement (1, 1') selon la revendication 3 ou 4,
**caractérisé en ce que** le dispositif de serrage (18) présente, en direction axiale, deux corps de serrage (20, 20') agencés des deux côtés du corps d'étanchéité (16), dans lequel les corps de serrage (20, 20') sont reliés entre eux au moyen d'un ou plusieurs éléments de serrage (22).

6. Module de raccordement (1, 1') selon l'une quelconque des revendications 3 à 5,
**caractérisé en ce que** le dispositif de serrage (18) est un premier dispositif de serrage, et un second dispositif de serrage (24) est en outre prévu pour le serrage de la seconde unité de fermeture (8, 10), dans lequel de préférence
le second dispositif de serrage (24) présente au moins un moyen de serrage (26) qui interagit de préférence avec une section de fixation (28) prévue sur le premier dispositif de serrage (24), dans lequel de préférence encore
l'au moins un moyen de serrage (26) s'étend à travers la seconde unité de fermeture (10) et est actionnable depuis le côté intérieur (110) de la section (102) de paroi extérieure, de préférence depuis l'extérieur de l'ouverture (104).

7. Module de raccordement (1, 1') selon l'une quelconque des revendications précédentes,
**caractérisé en ce que** la première et/ou la seconde unité de fermeture (8', 10) présente une rondelle d'étanchéité (30) s'étendant hors de l'ouverture (104) avec un élément d'étanchéité (32) qui est destiné à s'appuyer de manière étanche contre le côté extérieur (106) et/ou le côté intérieur (110) de la section (102) de paroi extérieure.

8. Module de raccordement (1') selon l'une quelconque des revendications précédentes,
**caractérisé en ce que** la première et la seconde unité de fermeture (8, 10) présentent un seul dispositif de serrage (24') qui est prévu pour le serrage de la première et la seconde unité de fermeture (8, 10) contre la zone côté paroi intérieure et côté paroi extérieure de la section (102) de paroi extérieure.

9. Module de raccordement (1, 1') selon l'une quelconque des revendications précédentes,
dans lequel deux sections de conduite (6, 6') conductrices de fluide sont prévues, et les unités de fermeture (8, 8', 10) présentent un ou plusieurs passages (34, 34') pour une conduite d'alimentation ou de signal ou des tubes vides (42) recevant la conduite d'alimentation ou de signal.

10. Module de raccordement (1, 1') selon l'une quelconque des revendications précédentes,
dans lequel l'une des deux unités de fermeture (8, 8',10) présente une ouverture de remplissage (12) pour un matériau d'isolation thermique (40) à introduire dans l'espace de réception (38).

11. Module de raccordement (1, 1') selon l'une quelconque des revendications précédentes,
**caractérisé en ce que** le matériau d'isolation thermique (40) est formé d'une ou plusieurs pièces moulées destinées à être insérées dans l'espace de réception (38).

12. Module de raccordement (1, 1') selon l'une quelconque des revendications précédentes,
dans lequel la section de conduite (6, 6') est pourvue d'une isolation sur sa face extérieure ; et/ou au moins l'une des interfaces de raccordement (2, 4) présente un raccord vissé (36), de préférence avec un élément d'étanchéité.

13. Agencement de liaison (100) d'un système d'échangeur de chaleur, comportant
- une section (102) de paroi extérieure de bâtiment à travers laquelle une ouverture (104) est formée,
- un appareil extérieur (108) agencé sur le côté extérieur (106) de la section (102) de paroi extérieure,
- un appareil intérieur (112) agencé sur le côté intérieur (110) de la section (102) de paroi extérieure, et
- un module de raccordement (1, 1') agencé dans l'ouverture (104) selon l'une quelconque des revendications 1 à 12, au moyen duquel l'appareil extérieur (108) et l'appareil intérieur (112) sont reliés entre eux à travers la section (102) de paroi extérieure.

14. Procédé d'installation d'un module de raccordement (1, 1') selon l'une quelconque des revendications 1 à 12 et/ou d'un agencement de raccordement (100) selon la revendication 13, dans une section (102) de paroi extérieure de bâtiment, à travers laquelle une ouverture (104) est formée, pour le raccordement à un appareil extérieur (108) agencé sur le côté extérieur (106) de la section (102) de paroi extérieure et à un appareil intérieur (112) agencé sur le côté intérieur (110) de la section (102) de paroi extérieure, comprenant les étapes :
- de mise à disposition ou de fabrication d'une ouverture (104) dans la section (102) de paroi extérieure de bâtiment ;
- d'insertion et de montage du module de raccordement (1, 1') dans l'ouverture (104) de la section (102) de paroi extérieure de sorte qu'un espace de réception (38) dans l'ouverture (104) est défini par une distance entre les unités de fermeture (8, 8', 10) ; et
- d'introduction de matériau d'isolation thermique (40) dans l'espace de réception (38) défini au moins par la distance entre les unités de fermeture (6, 6').

15. Procédé selon la revendication 14 comprenant une, plusieurs ou toutes les étapes réalisées suivantes :
- dans lequel le montage du module de raccordement (1) comprend l'étanchéification d'au moins une unité de fermeture (8, 10) par rapport à la section de conduite (6, 6') et à l'ouverture (104) dans la section (102) de paroi extérieure de bâtiment ;
- l'introduction du matériau d'isolation thermique (40) avant l'insertion du module de raccordement (1, 1') dans l'ouverture (104) ou après le montage du module de raccordement (1, 1') dans l'ouverture (104) dans l'espace de réception (38) défini par l'unité de fermeture (8, 8', 10), et
- le raccordement d'appareil intérieur et extérieur (108, 112) au module de raccordement (1, 1'), en particulier au moyen de sa première et de sa seconde interface de connexion (2, 4).

16. Utilisation d'un module de raccordement (1, 1'), réalisé selon l'une quelconque des revendications 1 à 12, pour la liaison en communication de fluide d'un appareil extérieur (108) pouvant être agencé côté extérieur d'un bâtiment avec un appareil intérieur (112) pouvant être agencé dans le bâtiment d'un système échangeur de chaleur à travers une ouverture (104) dans une section (102) de paroi extérieure de bâtiment.
